# EUROPEAN PATENT SPECIFICATION

(11) **EP 3 687 319 B1**
(45) Date of publication and mention of the grant of the patent: **02.12.2020**
(21) Application number: 18836597.7
(22) Date of filing: 28.12.2018
(51) Int. Cl.: A24F 40/53, A24F 40/42

(54) **INHALER WITH OPTICAL RECOGNITION AND CONSUMABLE THEREFOR**
INHALATOR MIT OPTISCHER ERKENNUNG UND VERBRAUCHSSTOFF DAFÜR
INHALATEUR AVEC RECONNAISSANCE OPTIQUE ET SON CONSOMMABLE

(30) Priority: 29.12.2017 EP 17211077
(43) Date of publication of application: 05.08.2020
(73) Proprietor: JT International SA, 1202 Geneva (CH)
(72) Inventor: ROGAN, Andrew, Robert, John, Moray IV36 HL (GB)
(74) Representative: Hoffmann Eitle
(86) International application number: PCT/EP2018/000587
(87) International publication number: WO 2019/129378

(56) References cited:
- EP-A1- 2 201 850
- WO-A1-2017/029089
- WO-A1-2017/203438
- GB-A- 2 478 573
- US-A1- 2014 037 362
- US-A1- 2017 311 647

## Description

### BACKGROUND AND PROBLEMS SUMMARY

### Field of invention

The present invention relates to electronic cigarettes with optical recognition capabilities and consumables therefor.

### Background

Electronic cigarettes have gained popularity in the recent years. There are two main types; liquid vaporizers and heated tobacco inhaler devices. The heated tobacco inhaler devices are referred to as "heat-not-burn" electronic cigarette systems. They provide an authentic tobacco flavor, which is often appreciated by the user. Their working principle is to heat a tobacco material comprising an aerosol-forming substance (such as glycerin or propylene glycol) which vaporizes during heating and creates a vapor that extracts nicotine and flavor components from the tobacco material. The tobacco substance is heated to between 200 and 450 °C, which is below the normal burning temperature of a conventional cigarette. The inhaler device is typically a hand-held heater device, which is configured to receive tobacco rod consumables.

In general, consumables for heated tobacco inhaler systems are only used one time whereafter they should be discarded. It is important that the heating temperature and the heating profile of the consumables are respected in order to assure that the tobacco in the tobacco rods is not burned. If the consumable is overly heated or used a second time, undesired volatile compounds may be released.

### Summary of the invention

It is an object of the present invention to ensure the correct usage of a smoking consumable in order to deliver a desired vapor composition.

According to a first aspect of the present invention, it relates to a consumable for an inhaler comprising a heating system and an optical reader, the consumable comprising an indicia containing information about the consumable,
wherein the indicia provides authorization information before the consumable has been exposed to a temperature exceeding a temperature threshold, and wherein the indicia is altered after it has been exposed to a temperature exceeding the temperature threshold.

The present invention is based on the realization that an indicia could be altered to provide different sets of information such that the first set of information makes the consumable authorized for use and the second set of information makes it rejectable.

According to an exemplary embodiment, the indicia comprises a first indicia that is readable by the optical reader before the consumable has been exposed to a temperature exceeding the temperature threshold and a second indicia which is only readable by the optical reader after the consumable has been exposed to a temperature exceeding the temperature threshold.

According to an exemplary embodiment, the second indicia comprises an optically readable pattern or code.

According to an exemplary embodiment, the second indicia is partially overlapping the first indicia in order to distort the information. By overlapping the first and the second indicia, a rejection error message can be triggered on purpose for used consumables.

According to an exemplary embodiment, the first indicia and the second indicia are placed side-by-side. The first indicia and the second indicia may be placed within a distance of each other of 1-10 mm.

According to an exemplary embodiment, the second indicia is created by a heat-activated ink, which changes from transparent to optically readable when exposed to a temperature exceeding the temperature threshold.

According to an exemplary embodiment, the heat-activated ink is selected from the group comprising sodium chloride, ascorbic acid and sucrose.

According to an exemplary embodiment, the indicia is readable by an optical reader before it has been exposed to a temperature above the temperature threshold and wherein the indicia at least partially disappears or partially fades away after the consumable has been exposed to a temperature above the temperature threshold.

According to an exemplary embodiment, the indicia comprises a thermochromic ink, which irreversibly becomes transparent after having been exposed to a temperature exceeding the temperature threshold.

According to an exemplary embodiment, the indicia becomes transparent after having been exposed to a temperature exceeding 60 °C.

According to an exemplary embodiment, the second indicia is printed on the same sheet as the first indicia.

According to an exemplary embodiment, the second indicia is printed on a different sheet from the first indicia.

According to an exemplary embodiment, the second indicia is only readable after having been exposed to a temperature exceeding 60 °C. In an exemplary embodiment, the second indicia permanently marks the consumable.

According to another aspect of the present invention, it relates to an inhaler for heated cigarette rods comprising a mouthpiece section and a power supply section, the mouthpiece portion comprising a cavity configured to receive a consumable, wherein the inhaler further comprises an optical reader system configured to read an indicia located on the consumable, and wherein the optical reader system comprises a control unit configured to determine if the consumable has been exposed to a temperature exceeding a temperature threshold.

According to an exemplary embodiment, the control unit is further configured to read a second indicia.

According to an exemplary embodiment, the optical reader system is configured to read and recognize a first set of information, which authorizes the consumable, and a second set of information, which rejects the consumable.

### Brief description of the drawings

The invention will now be described with reference to the appended drawings, which by way of example illustrate embodiments of the present invention and in which like features are denoted with the same reference numerals.
Fig. 1 is a schematic perspective view of an inhaler according to an exemplary embodiment of the present invention;
Fig. 2 is an exploded view of a consumable according to an exemplary embodiment of the present invention;
Figs. 3a to 3c are schematic cross-sectional views of an inhaler and a consumable according to exemplary embodiments of the present invention;
Figs. 4a to 4d are schematic perspective views of a consumable according to various embodiments of the present invention;
Fig. 5a is a schematic perspective view of a used consumable according to an embodiment of the present invention; and
Fig. 5b is a schematic perspective view of a spacer portion of the consumable of figure 5a.

### Detailed description

In the context of the present disclosure, the term consumable can relate to heated tobacco rods, but may also relate to other types of consumables which are configured to be heated in order to release a vapor. Examples of other types of consumables may include rigid or flexible capsules containing tobacco substances or any other suitable herbal substance in the form of e.g. a powder or loose leaf. The inhaler is preferably in the form of an electronic cigarette, which can be configured to generate a continuous supply of an aerosol.

As used herein, the term "inhaler" or "apparatus" may include an electronic cigarette configured to deliver an aerosol to a user, including an aerosol for smoking. An aerosol for smoking may refer to an aerosol with particle sizes of 0.5 - 7 microns. The particle size may be less than 10 or 7 microns. The inhaler may be portable.

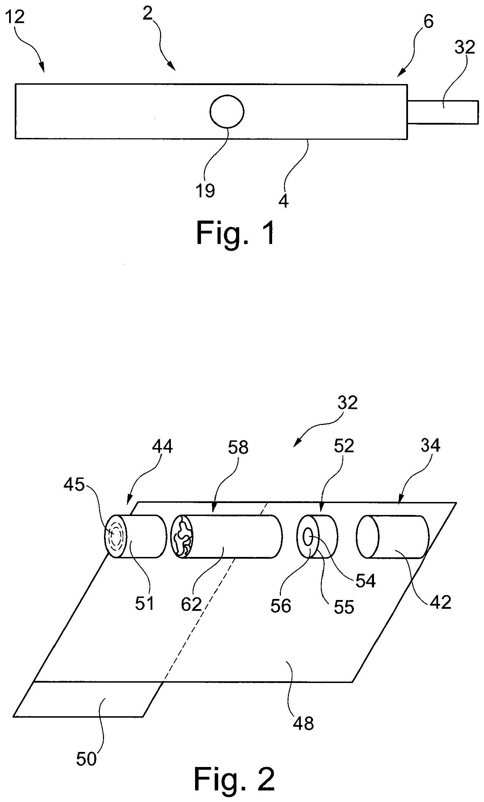

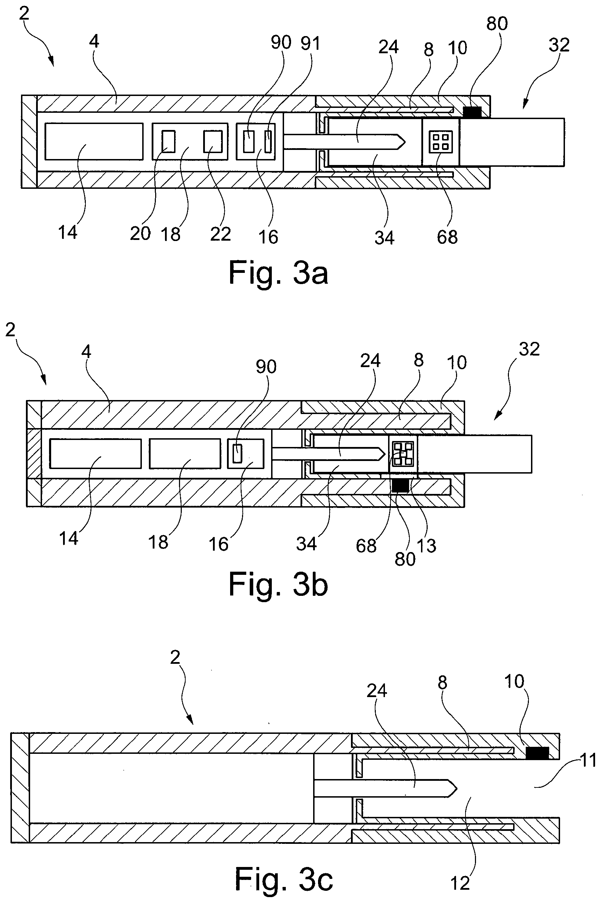

Referring to the drawings and in particular to figures 1 and 3a to 3c, an inhaler 2 according to the present invention is illustrated. The inhaler 2 has a housing 4 and comprises a mouthpiece section 6, a power supply section 12 and a heating system 24. The inhaler 2 is configured to receive consumables 32, which may be in the form of tobacco rods. The consumables 32 may comprise a tobacco portion 34 made from a tobacco substrate and an aerosol-forming substance such as glycerin or propylene glycol.

The power supply section 12 comprises a power supply unit 14, an activation mechanism 19, a control unit 16 and a sensing module 18. The power supply unit 14 may for instance comprise batteries, such as rechargeable Lithium batteries. If rechargeable batteries are used, the housing 4 of the inhaler 2 may be provided with a socket adapted to engage with an external battery recharger.

As seen in figure 3c, the mouthpiece section 6 comprises a cavity 12 configured to receive a consumable 32. The heater system 24 is located in the cavity 12, and is configured to heat the tobacco portion 34 of the consumables 32 such that the aerosol-forming substance evaporates. The heating system 24 may comprise a heater element in the form of a blade or a rod. When the consumable 32 is introduced into the cavity 12, the blade 24 is inserted into the tobacco portion 34 of the consumable 32. However, the heating system 24 of the present invention is not limited to an internal heating system 24 and other types of heating systems 24 such as an external induction heating systems are also possible.

The mouthpiece section 6 may comprise a fixed portion 8 and a slidable portion 10. The slidable portion 10 may act as a guide to introduce the consumable 32 into the cavity 12 to make sure that the consumable 32 is accurately positioned and is aligned with the blade.

The control unit 16 is configured to activate the inhaler 2 and to control the heating system 24. The control unit 16 can be configured to receive data in the form of user input and/or information from the sensing module 18. The control unit 16 can be triggered by an activation mechanism 19. The activation mechanism 19 can be in the form of a single user-activated button 19, or an interface enabling multiple activation mechanisms, and optionally also a display.

The sensing module 18 may comprise an airflow sensor 20 configured to detect an airflow when a user inhales from the inhaler 2. To ensure that the operating temperature remains in a "heat-not-burn" temperature range, the sensing module 18 may comprise a temperature sensor 22. The temperature sensor 22 may be configured to sense the temperature and communicate the measured temperature to the control unit 16. The control unit 16 receives temperature data from the temperature sensor 22, compares the data with an allowable temperature range and regulates the power supply to the heating system 24 accordingly. In that way, the control unit 16 can ensure that the temperature range is within a desired range, such as between 200 and 450 °C. The control unit 16 may also comprise a timer 91, configured to ensure that the consumable 32 is only be used during a certain amount of time.

Now referring to figure 2, which illustrates an exploded view of a prior art consumable 32 in the form of a tobacco rod. The consumable 32 may comprise a plurality of rod-shaped elements in the form of a tobacco portion 34, a mouthpiece portion 44, a rigidified portion 58 and a spacer portion 52 located between the tobacco portion 34 and the rigidified portion 58.

The rod-shaped elements are assembled and held together by a tipping paper 48 and a plug wrap 50. The plug wrap 50 further enhances the stability between the filter portion 34 and the rigidified portion 58. The tobacco portion 34 may comprise tobacco substrate mixed together with an aerosol-forming substance. The tobacco portion 34 may be shaped as a plug and retained within a paper sheet in the form of a tobacco wrap 42.

The mouthpiece portion 44 may comprise a filter portion 45 retained within a filter wrap 51. The filter portion may 45, for instance, comprise a conventional filter material such as acetate fibers and the filter wrap 51 is typically made from paper material.

The rigidified portion 58 is located between the mouthpiece portion 44 and the tobacco portion 44. The rigidified portion 58 is configured to provide a rigid extension to the tobacco portion 34 and to enhance the airflow from the tobacco portion 34 and the mouthpiece portion 44. The rigidified portion 58 may be a corrugated sheet material, which is maintained within a paper sheet wrap 62. Longitudinal air channels are created through the rigidified portion 58 which enhance the airflow through the consumable 32.

The spacer portion 52 comprises a filter 55 retained within a filter wrap 56. The spacer portion comprises a central channel 54 in order to facilitate and centralize the airflow through the consumable 32. The central channel 54 may also be used as a positioning support for a heater, such as a heating blade 26.

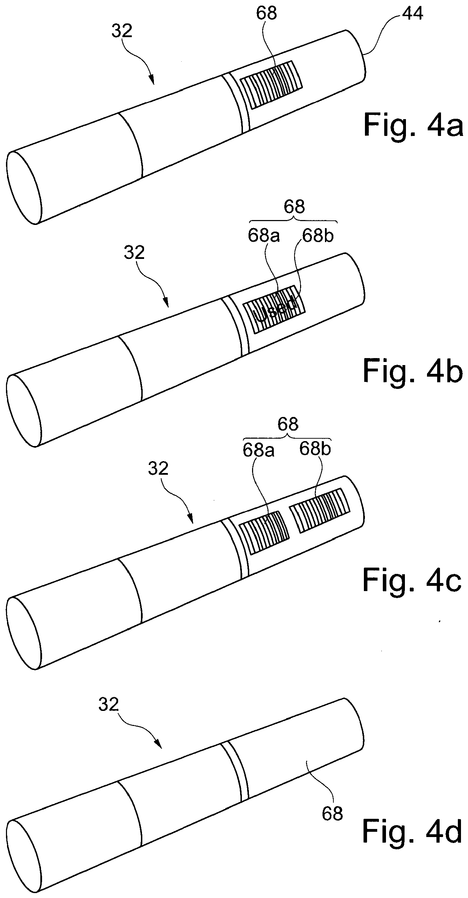

The consumables 32 of the present invention may be provided with a similar structure as the prior art structure illustrated in figure 2. However, as seen in figure 4a, the consumables 32 of the present invention are further provided with an indicia 68, which contains information configured to authenticate the consumable 32. In use of the inhaler 2, an authentic indicia 68 enables the heating system 24 of the inhaler 2. On the contrary, non-authentic indicia blocks the heating system 24 and preferably triggers an error message to the user. Additionally, the indicia 68 may comprise product-related information such as the brand, manufacturing date, expiration date etc. The indicia 68 is a code, which is optically readable and may for instance be in the form of a one-dimensional or two-dimensional barcode.

The consumable 32 in figure 4a is in an unused stage, i.e. it has not been exposed to a temperature exceeding a temperature threshold T. In the illustrated example, only a first indicia 68 is visible. The temperature threshold is providing an alternation of the indicia 68 of the consumable. Hence, when the consumable has been exposed to temperatures exceeding the temperature threshold T, the consumable 32 can no longer be authenticated.

As seen in figure 4a, the indicia 68 comprises a set of first information *I1* about the consumable 32. The first information *I1* contains data in order to identify the consumable 32. The first information *I1* thus provides authentication data to enable the control unit 16 of the inhaler 2 to accept or reject the consumable 32. The indicia 68 may also provide product-related information such as the brand, the flavor, the manufacturing date/expiration date of the consumable 32. If the optical reader has determined a non-authorized indicia *I1,* it will send a signal to the control unit, which will block the heating system The inhaler device 2 can be configured to provide a notification to the user, at least if the consumable 32 is not authorized. The inhaler 2 may further comprise a display configured to display information extracted from the consumable. Hence, the inhaler 2 may provide indicators on whether the consumable is authorized. The display may also display product-related information such as best-before date, flavor etc. Alternatively, the inhaler 2 can be connected to an independent computing device such as a mobile phone or other external computing device, which can provide authentication and product-related information.

The temperature threshold *T* is selected within a range between 60°C and 200°C. The lower temperature ranges are advantageous as they provide a more reactive response from the indicia 68 and thus making sure that the indicia is altered. The temperature threshold *T* is exceeded as heat from the heating system 24 is transferred to the indicia.

The consumable 32 in figures 4b to 4d illustrate various embodiments of consumables 32, which have been exposed to temperatures above the threshold *T.*

The indicia 68 may be located on the tipping paper 48 or the plug wrap and may be a printed pattern. The indicia 68 may be located on the tipping paper 48 over the rigidified portion 58. By positioning the indicia 68 over the rigidified portion 58, the indicia is less prone to become creased.

Figures 4b to 4d illustrate different embodiments of the consumable of figure 4a after it has been exposed to temperatures above the temperature threshold *T.* As seen in figures 4b to 4d, the indicia 68 is configured to be altered after it has been exposed to temperatures above the temperature threshold *T.*

As illustrated in figures 4b and 4c, the indicia 68 is altered after it has been exposed to temperatures above the temperature threshold *T* to comprise a first indicia 68a and a second indicia 68b. The first indicia 68a may correspond to the indicia which is visible before the consumable 32 has been exposed to the temperature threshold *T.* The second indicia 68b can be an additional readable indicia, such as a second readable code 68b, which contains information that it has been used. The second indicia 68b may be superposing or at least partially superposing the first indicia 68a to distort the information on the first indicia 68 and to make it unreadable. It may be advantageous to provide the second indicia in the form of a clear indication to the user, such as a written message stating "Used" or a suitable symbol for communicating that the consumable should be discarded and is not suitable for further use. Alternatively, as illustrated in figure 4c, the second indicia 68b may contain a second set of information *I2,* which does not give a reading error to the optical reader 80, but instead provides readable information indicating that the consumable 32 has been used.

The second indicia 68b may be heat-activated. In an advantageous embodiment, the second indicia is a thermally activated ink, which appears after it has been exposed to a temperature above the temperature threshold *T.*

Alternatively, as illustrated in figure 4d, the indicia 68 may be altered after being exposed to a temperature above the temperature threshold *T* such that the indicia 68 disappears or fades away. Similar to the embodiment illustrated in figure 4a, the indicia 68 is configured to provide authentication information of the consumable 32 before it has been exposed to temperatures exceeding a temperature threshold *T.* However, as seen in figure 4d, the indicia 68 disappears or partly fades away after it has been exposed to a temperature above the temperature threshold *T.* The indicia 68 is formed from a heat-sensitive composition, which disappears when heated over the temperature threshold *T.*

Preferably, the chemical to be used as invisible ink is stable and does not deteriorate if the consumable get moist. Examples of thermally activated inks which appears after being exposed to heat are (common table salt), ascorbic acid, sucrose (more). Additionally, compositions containing Zinc could be used either as an ink or to make the tipping paper 48 heat-sensitive and prone to change color when exposed to heat.

The heat-sensitive composition may comprise a thermochromic ink, which irreversibly turns transparent when heat is applied. An example of an irreversible ink is a formula comprising 1',3'-dihydro-1-(3-fluorobenzyl)-3',3'-dimethyl-6-nitrospiro {2H-1-henzopyran-2,2'-(2H)-indulu} in combination with a changing color agent such as 4-methylacetophenone. Spiropyrans, polydiacetylenes can also be used and has the capability of change color or becoming transparent when the temperature is altered.

Other examples of suitable thermochromic inks are further described in the documents US2010/0329950, EP2128610 and US20140037362, the content of which is hereby incorporated by reference. Specifically, irreversible thermochromic inks in these documents are of relevance and can be used in the present invention.

Referring back to figures 3a to 3c, the inhaler 2 of the present invention comprises an optical reader 80 comprising an image sensor configured to read the indicia 68 on the consumables 32. The image sensor comprises a light source and an image detector. The optical reader 80 is connected to the control unit 16, which is configured to read the information from the indicia 68 and compare it to a set of authorized information stored in the memory unit 90. The memory unit 90 may provide a compensation to allow a deviation between the read information and the authorized information. By allowing minor deviations, false rejections due to a damaged indicia or a creased tipping paper 48 may be avoided.

The indicia 68 may be positioned on the rigidified portion 58 of the consumable 32. By positioning the indicia 68 on the rigidified portion 58, there is less risk of creasing the barcode. As seen in figure 3c, the optical reader 80 can be positioned on the slidable portion 10 at a corresponding position, and over the rigidified portion 58 of the consumable 32. By locating the indicia 68 over the rigidified portion 58, a more stable support is provided for the indicia 68, whereby the durability of the indicia 68 can be improved. In this embodiment, the optical reader 80 is located close to the cavity opening 11. The position close to the cavity opening 11 is also advantageous as the volume of fumes and vapor is lower in this position than closer to the heater 24 where the vaporization of the aerosol takes place.

Alternatively, as seen in figure 3b, the optical reader 80 may be located on the fixed portion 8 of the mouthpiece section 6. This position corresponds to a positon of the consumable 32 located over the spacer portion 52. The position over the spacer portion 52 is located closer to the heating system 24 and more exposed to the vapor and fumes. In order to protect the optical reader 80, the slidable portion may comprise a window 13 or an opening 13 at the position of the indicia 68.

The window 13 is at least partially encircling the circumference of the slidable portion 10. By partially encircling the slidable portion 10, the optical reader 80 is able to read the indicia on the consumable indicia 68 irrespectively of the angular position of the consumable 32 within the slidable portion 10. The indicia 68 can be a pattern, which is repeated around the circumference of the consumable 32 so that the optical reader is capable of reading the indicia irrespectively of the orientation of the consumable in the cavity 12.

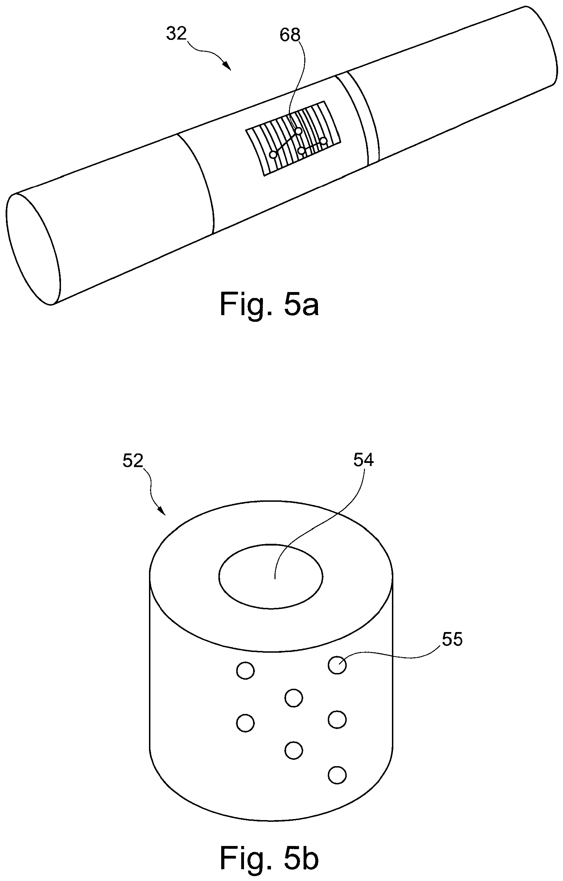

Figure 5a and 5b illustrate another exemplary embodiment of a consumable 32 of the present invention. The consumable 32 of figure 5a is provided with an indicia 68. The first indicia 68 comprises identification information in order to authorize the usage of the consumable 32 in the inhaler 2. The consumable 32 may be configured as illustrated in figure 4. The spacer portion 52 is similar to the embodiment in figure 2, but differs in that the spacer 52 is provided with at least one circumferential aperture 55. The circumferential aperture 55 is configured to divert fumes or substances released from the tobacco portion 34 such to create a stain on the tipping paper. The circumferential aperture 55 may be connected to the central channel 54 of the spacer 52. The circumferential aperture 55 is positioned to divert a portion of the fumes to a position adjacent or at least partially interfering with the indicia 68. The fumes will thus make a deliberate stain in relation to the indicia 68 and provide information either to a reader or to make the code unreadable.

In another non-illustrated embodiment, the consumable 32 can be provided with a weakening in the tipping paper, such that the paper becomes stained when the consumable is exposed to heat.

The skilled person will realize that the present invention by no means is limited to the described exemplary embodiments. The mere fact that certain measures are recited in mutually different dependent claims does not indicate that a combination of these measures cannot be used to advantage. Moreover, the expression "comprising" does not exclude other elements or steps. Other non-limiting expressions include that "a" or "an" does not exclude a plurality and that a single unit may fulfill the functions of several means. Any reference signs in the claims should not be construed as limiting the scope. Finally, while the invention has been illustrated in detail in the drawings and in the foregoing description, such illustration and description is considered illustrative or exemplary and not restrictive.

## Claims

1. A consumable (32), for an inhaler (2) comprising a heating system (24) and an optical reader (80), the consumable (32) comprising an indicia (68) containing information about the consumable (32),
wherein the indicia (68) provides authorization information before the consumable (32) has been exposed to a temperature exceeding a temperature threshold (*T*), and wherein the indicia (68) is altered after it has been exposed to a temperature exceeding the temperature threshold (*T*), wherein the indicia (68) comprises a first indicia (68a) that is readable by the optical reader (80) before the consumable (32) has been exposed to a temperature exceeding the temperature threshold (*T*), and
wherein the indicia (68) comprises a second indicia (68b) which is only readable by the optical reader (80) after the consumable (32) has been exposed to a temperature exceeding the temperature threshold (*T*).

2. The consumable (32) according to claim 1, wherein the second indicia (68b) comprises an optically readable pattern or code.

3. The consumable (32) according to claim 1 or 2, wherein the second indicia (68b) is partially overlapping the first indicia (68a) in order to distort the information.

4. The consumable (32) according to claim 1 or 2, wherein the first indicia (68a) and the second indicia (68b) are placed side-by-side.

5. The consumable (32) according to any of claims 1 to 4, wherein the second indicia (68b) is created by a heat-activated ink, which changes from transparent to optically readable when exposed to a temperature exceeding the temperature threshold (*T*).

6. The consumable (32) according to claim 5, wherein the heat-activated ink is selected from the group comprising sodium chloride, ascorbic acid and sucrose.

7. The consumable (32) according to claim 1, wherein the indicia (68) is readable by an optical reader (80) before it has been exposed to a temperature above the temperature threshold (*T*) and wherein the indicia (68) at least partially disappears or partially fades away after the consumable has been exposed to a temperature above the temperature threshold (*T*).

8. The consumable (32) according to claim 7, wherein the indicia (68) comprises a thermochromic ink, which irreversibly becomes transparent after having been exposed to a temperature exceeding the temperature threshold (*T*).

9. The consumable (32) according to claim 8, wherein the indicia becomes (68) transparent after having been exposed to a temperature exceeding 60 ºC.

10. The consumable (32) according to any one of claims 1 to 9, wherein the first indicia (68a) is printed on a sheet and the second indicia (68b) is printed on the same sheet as the first indicia (68a).

11. The consumable (32) according to any one of claims 1 to 9, wherein the first indicia (68a) is printed on a sheet wherein the second indicia (68b) is printed on a different sheet from the first indicia (68a).

12. The consumable (32) according to any one of the preceding claims, wherein the second indicia (68b) is only readable after having been exposed to a temperature exceeding 60 ºC.

13. An inhaler (2) for heated cigarette rods comprising:
a consumable (32) according to one of the claims 1 to 12;
a mouthpiece section (6) comprising a cavity (12) configured to receive the consumable (32);
a power supply section (12); and
an optical reader system (80) configured to read the indicia (68) located on the consumable (32), the optical reader system (80) comprising a control unit (16) configured to determine if the consumable (32) has been exposed to a temperature exceeding a temperature threshold (*T*).

## Patentansprüche

1. Verbrauchsstoff (32) für einen Inhalator (2), der ein Heizsystem (24) und ein optisches Lesegerät (80) umfasst, wobei der Verbrauchsstoff (32) eine Anzeige (68) umfasst, die Informationen über den Verbrauchsstoff (32) enthält,
wobei die Anzeige (68) Autorisierungsinformationen bereitstellt, bevor der Verbrauchsstoff (32) einer Temperatur ausgesetzt wurde, die einen Temperaturschwellenwert (*T*) überschreitet, und wobei die Anzeige (68) verändert wird, nachdem sie einer Temperatur ausgesetzt wurde, die den Temperaturschwellenwert (*T*) überschreitet, wobei die Anzeige (68) eine erste Anzeige (68a) umfasst, die durch den optischen Leser (80) lesbar ist, bevor der Verbrauchsstoff (32) einer Temperatur ausgesetzt wurde, die den Temperaturschwellenwert (*T*) überschreitet, und
wobei die Anzeige (68) eine zweite Anzeige (68b) umfasst, die nur durch den optischen Leser (80) lesbar ist, nachdem der Verbrauchsstoff (32) einer Temperatur ausgesetzt wurde, die den Temperaturschwellenwert (*T*) übersteigt.

2. Verbrauchsstoff (32) nach Anspruch 1, wobei die zweite Anzeige (68b) ein optisch lesbares Muster oder einen optisch lesbaren Code umfasst.

3. Verbrauchsstoff (32) nach Anspruch 1 oder 2, wobei die zweite Anzeige (68b) die erste Anzeige (68a) teilweise überlappt, um die Information zu verzerren.

4. Verbrauchsstoff (32) nach Anspruch 1 oder 2, wobei die erste Anzeige (68a) und die zweite Anzeige (68b) nebeneinander platziert sind.

5. Verbrauchsstoff (32) nach einem der Ansprüche 1 bis 4, wobei die zweite Anzeige (68b) durch eine wärmeaktivierte Tinte erzeugt wird, die sich von transparent in optisch lesbar ändert, wenn sie einer Temperatur ausgesetzt wird, die den Temperaturschwellenwert (*T*) überschreitet.

6. Verbrauchsstoff (32) nach Anspruch 5, wobei die wärmeaktivierte Tinte aus der Gruppe ausgewählt ist, die Natriumchlorid, Ascorbinsäure und Saccharose umfasst.

7. Verbrauchsstoff (32) nach Anspruch 1, wobei die Anzeige (68) durch einen optischen Leser (80) lesbar ist, bevor sie einer Temperatur oberhalb des Temperaturschwellenwerts (*T*) ausgesetzt wurde, und wobei die Anzeige (68) zumindest teilweise verschwindet oder teilweise verblasst, nachdem der Verbrauchsstoff einer Temperatur oberhalb des Temperaturschwellenwerts (*T*) ausgesetzt wurde.

8. Verbrauchsstoff (32) nach Anspruch 7, wobei die Anzeige (68) eine thermochromische Tinte umfasst, die irreversibel transparent wird, nachdem sie einer Temperatur ausgesetzt wurde, die den Temperaturschwellenwert (*T*) übersteigt.

9. Verbrauchsstoff (32) nach Anspruch 8, wobei die Anzeige (68) transparent wird, nachdem sie einer Temperatur ausgesetzt wurde, die 60 °C übersteigt.

10. Verbrauchsstoff (32) nach einem der Ansprüche 1 bis 9, wobei die erste Anzeige (68a) auf ein Blatt gedruckt ist und die zweite Anzeige (68b) auf dasselbe Blatt wie die erste Anzeige (68a) gedruckt ist.

11. Verbrauchsstoff (32) nach einem der Ansprüche 1 bis 9, wobei die erste Anzeige (68a) auf ein Blatt gedruckt ist wobei die zweite Anzeige (68b) auf ein anderes Blatt als die erste Anzeige (68a) gedruckt ist.

12. Verbrauchsstoff (32) nach einem der vorstehenden Ansprüche, wobei die zweite Anzeige (68b) nur lesbar ist, nachdem sie einer Temperatur ausgesetzt wurde, die 60 °C übersteigt.

13. Inhalator (2) für erwärmte Zigarettenstäbchen, umfassend:
ein Verbrauchsstoff (32) nach einem der Ansprüche 1 bis 12;
einen Mundstückabschnitt (6), umfassend einen Hohlraum (12), der zur Aufnahme des Verbrauchsstoffs (32) konfiguriert ist;
einen Stromversorgungsabschnitt (12); und
ein optisches Lesesystem (80), das so konfiguriert ist, dass es die auf dem Verbrauchsstoff (32) befindliche Anzeige (68) liest, wobei das optische Lesesystem (80) eine Steuereinheit (16) umfasst, die so konfiguriert ist, dass sie bestimmt, ob der Verbrauchsstoff (32) einer Temperatur ausgesetzt war, die einen Temperaturschwellenwert (*T*) übersteigt.

## Revendications

1. Consommable (32), pour un inhalateur (2) comprenant un système de chauffage (24) et un lecteur optique (80), le consommable (32) comprenant une indication (68) contenant des informations sur le consommable (32),
dans lequel l'indication (68) fournit des informations d'autorisation avant l'exposition du consommable (32) à une température dépassant un seuil de température (*T*), et dans lequel l'indication (68) est modifiée après avoir été exposée à une température dépassant le seuil de température (*T*), dans lequel l'indication (68) comprend une première indication (68a) qui est lisible par le lecteur optique (80) avant l'exposition du consommable (32) à une température dépassant le seuil de température (*T*), et
dans lequel l'indication (68) comprend une seconde indication (68b) qui n'est lisible par le lecteur optique (80) qu'après l'exposition du consommable (32) à une température dépassant le seuil de température (*T*).

2. Consommable (32) selon la revendication 1, dans lequel la seconde indication (68b) comprend un motif ou un code optiquement lisible.

3. Consommable (32) selon la revendication 1 ou 2, dans lequel la seconde indication (68b) chevauche partiellement la première indication (68a) afin de déformer l'information.

4. Consommable (32) selon la revendication 1 ou 2, dans lequel la première indication (68a) et la seconde indication (68b) sont placées côte à côte.

5. Consommable (32) selon l'une quelconque des revendications 1 à 4, dans lequel la seconde indication (68b) est créée par une encre thermoactivée, qui passe de transparente à optiquement lisible lorsqu'elle est exposée à une température dépassant le seuil de température (*T*).

6. Consommable (32) selon la revendication 5, dans lequel l'encre thermoactivée est choisie dans le groupe comprenant le chlorure de sodium, l'acide ascorbique et le saccharose.

7. Consommable (32) selon la revendication 1, dans lequel l'indication (68) est lisible par un lecteur optique (80) avant d'avoir été exposée à une température supérieure au seuil de température (*T*) et dans lequel l'indication (68) disparaît au moins partiellement ou s'efface partiellement après l'exposition du consommable à une température supérieure au seuil de température (*T*).

8. Consommable (32) selon la revendication 7, dans lequel l'indication (68) comprend une encre thermochromique, qui devient transparente de manière irréversible après avoir été exposée à une température dépassant le seuil de température (*T*).

9. Consommable (32) selon la revendication 8, dans lequel l'indication (68) devient transparente après avoir été exposée à une température dépassant 60 °C.

10. Consommable (32) selon l'une quelconque des revendications 1 à 9, dans lequel la première indication (68a) est imprimée sur une feuille et la seconde indication (68b) est imprimée sur la même feuille que la première indication (68a).

11. Consommable (32) selon l'une quelconque des revendications 1 à 9, dans lequel la première indication (68a) est imprimée sur une feuille dans lequel la seconde indication (68b) est imprimée sur une feuille différente de la première indication (68a).

12. Consommable (32) selon l'une quelconque des revendications précédentes, dans lequel la seconde indication (68b) n'est lisible qu'après avoir été exposée à une température dépassant 60 °C.

13. Inhalateur (2) pour tiges de cigarette chauffées comprenant :
un consommable (32) selon l'une quelconque des revendications 1 à 12 ;
une section embout buccal (6) comprenant une cavité (12) configurée pour recevoir le consommable (32) ;
une section alimentation électrique (12) ; et
un système de lecteur optique (80) configuré pour lire l'indication (68) située sur le consommable (32), le système de lecteur optique (80) comprenant une unité de commande (16) configurée pour déterminer si le consommable (32) a été exposé à une température dépassant un seuil de température (*T*).
